# EUROPÄISCHE PATENTANMELDUNG

(11) **EP 2 269 727 A1**
(43) Veröffentlichungstag der Anmeldung: **05.01.2011**
(21) Anmeldenummer: 09008616.6
(22) Anmeldetag: 01.07.2009
(51) Int. Cl.: B01J 19/20

(54) **Rohrreaktor und Verfahren zur kontinuierlichen Polymerisation**

(71) Anmelder: LANXESS International SA, 1763 Granges-Paccot (CH)
(72) Erfinder: Paul, Hanns-Ingolf, Dr., 51375 Leverkusen (DE); Feller, Rolf,, 40822 Mettmann (DE); Wagner, Paul, Dr., 40597 Düsseldorf (DE); Lovegrove, John, Dr., Sarnia N7S 2L4 Ontario (CA); Kirchhoff, Jörg, Dr., 51061 Köln (DE); Ritter, Joachim, Dr., 51373 Leverkusen (DE); Leiberich, Ricarda, Dr., 63263 Neu-Isenburg (DE); Wiesner, Udo, Dr., 53332 Bornheim (DE)
(74) Vertreter: Deblon, Jörg-Stephan

(57) **Zusammenfassung**

Die vorliegende Erfindung betrifft einen Rohrreaktor (10) und ein Verfahren zur kontinuierlichen Polymerisation, wobei der Rohrreaktor (10) ein im Wesentlichen rohrförmiges Reaktorgehäuse (16) aufweist. Das Reaktorgehäuse (16) weist einen in Strömungsrichtung (22) entlang der geometrischen Mittelachse (12) verlaufenden Antrieb (38) auf, der als Mittelwelle ausgestaltet ist. Innerhalb des Reaktorgehäuses (16) ist ein drehbar angeordneter Schaber (36) vorgesehen, wobei der Schaber (36) mindestens ein Schaberblatt (42) zum Entlanglaufen an einer Innenseite (44) des Reaktorgehäuses (16) aufweist. Vorzugsweise ist die geometrischen Mittelachse (12) im Wesentlichen horizontal angeordnet. Durch die Drehbewegung des Schabers (36) wird eine radiale Vermischung einer Strömung innerhalb des Reaktorgehäuses (16) erreicht, die Schwerkrafteffekte dominiert und eine Kolbenströmung innerhalb des Rohrreaktors (10) ermöglicht. Dies erlaubt es die Reaktionsbedingungen in axialer Richtung des Reaktorgehäuses (10) vorherzusagen und individuell geeignete Reaktionsbedingungen entlang des Reaktorgehäuses einzustellen und zu kontrollieren, so dass sich insbesondere eine gewünschte Molekulargewichtsverteilung einstellen lässt.

## Beschreibung

Die vorliegende Erfindung betrifft einen Rohrreaktor, dessen Einsatz in einem Verfahren zur kontinuierlichen Herstellung von Polymeren wie insbesondere synthetischen Kautschuken, sowie das vorgenannte Verfahren selbst.

Aus US 4,282,925 ist ein Wärmetauscher bekannt, der ein im Wesentlichen rohrförmiges Gehäuse mit einer vertikal verlaufenden Mittelwelle aufweist. Der Wärmetauscher weist einen Schaber auf, der mit Hilfe von Schaberblättern an einer Innenseite des Gehäuses entlangläuft.

Nachteilig bei einem derartigen Wärmetauscher ist, dass er nur schlecht als Rohrreaktor für eine kontinuierliche Polymerisation verwendet werden kann, da sich die Reaktionsbedingungen nur sehr schlecht kontrollieren und beeinflussen lassen. Insbesondere ist es kaum möglich, eine gewünschte Molekulargewichtsverteilung einstellen zu können.

Es ist die Aufgabe der Erfindung, einen Rohrreaktor sowie ein Verfahren zur kontinuierlichen Polymerisation zu schaffen, mit deren Hilfe die Reaktionsbedingungen der Polymerisation besser beeinflusst werden können und insbesondere die Einstellung einer gewünschten Molekulargewichtsverteilung erleichtert werden kann.

Die Lösung der Aufgabe erfolgt erfindungsgemäß durch einen Rohrreaktor mit den Merkmalen des Anspruchs 1 sowie einem Verfahren mit den Merkmalen des Anspruchs 17. Bevorzugte Ausführungsformen der Erfindung sind in den Unteransprüchen angegeben.

Der erfindungsgemäße Rohrreaktor zur kontinuierlichen Polymerisation, der insbesondere zur Herstellung von synthetischen Kautschuken durch Polymerisation verwendet werden kann, umfasst zumindest ein im Wesentlichen rohrförmiges Reaktorgehäuse, wobei das Reaktorgehäuse einen Antrieb aufweist, der mit zumindest einem innerhalb des Reaktorgehäuses drehbar angeordneten Schaber verbunden ist und wobei der Schaber mindestens ein Schaberblatt zum Entlanglaufen an einer Innenseite des Reaktorgehäuses aufweist.

Der Antrieb kann dabei beispielsweise als Welle ausgestaltet sein, wobei die Welle beispielsweise als im Wesentlichen entlang der geometrischen Mittelachse verlaufende Mittelwelle oder als dezentrale Welle ausgestaltet sein kann. Im Sinne der Erfindung bedeutet eine dezentrale Welle beispielsweise eine Welle, die einen um die geometrische Mittelachse des Reaktors drehbar gelagerten Käfig oder ein entsprechendes Gestänge aufweist, wobei der Käfig oder das Gestänge zumindest einen innerhalb des Reaktorgehäuses drehbar angeordneten Schaber aufweist und wobei zumindest teilweise, vorzugsweise zumindest überwiegend eine entlang der geometrischen Mittelachse verlaufende Mittelwelle nicht vorhanden ist.

Die Wellen können gegebenenfalls selbst kühlbar sein oder Mittel aufweisen, mit denen Edukte über die Welle in den Innenraum des Reaktorgehäuses geleitet werden können.

Vorzugsweise ist die geometrischen Mittelachse des Reaktorgehäuses im Wesentlichen horizontal angeordnet.

In einer bevorzugten Ausführungsform ist der Rohrreaktor nicht stehend, sondern liegend, das heißt mit im Wesentlichen horizontaler geometrischer Mittelachse des Reaktorgehäuses angeordnet. Dadurch können schwerkraftbedingte Strömungen in und entgegen der Strömungsrichtung vermieden werden.

Erfindungsgemäß ist es möglich, unterschiedliche Strömungsgeschwindigkeiten in Strömungsrichtung zu vermeiden oder zumindest deutlich zu reduzieren. Insbesondere kann eine Schlaufenströmung vermieden werden. Dies ermöglicht es, in Strömungsrichtung entlang des Reaktorgehäuses unter Berücksichtigung der Verweilzeit der Strömung innerhalb des Reaktorgehäuses und der Reaktionskinetik die lokalen Reaktionsverhältnisse vorherzusagen. So ist es beispielsweise möglich lokale Edukt-Konzentrationen, Produkt-Konzentrationen sowie entstehender Reaktionswärmen entlang des Reaktorgehäuses bereits im Vorfeld zu berechnen. Aufgrund der genaueren Kenntnisse der unterschiedlichen Reaktionssituationen entlang des Strömungsweges ist es möglich, lokal unterschiedliche Maßnahmen einzuleiten, um die Polymerisationsreaktion zu beeinflussen. Beispielsweise ist es möglich, einen Teilbereich des Reaktorgehäuses zu identifizieren, wo mit einer besonders hohen Reaktionstätigkeit zu rechnen ist, die zu einer entsprechend hohen Wärmeentwicklung (exotherme Reaktion) oder einem entsprechend hohen Wärmebedarf (endotherme Reaktion) zu rechnen ist. Speziell in diesem Bereich kann mit Hilfe eines Wärmetauschers ein entsprechend großer Wärmetransport zwischen der Strömung innerhalb des Reaktorgehäuses und einem Wärmetauschermedium eingestellt werden, um eine optimale Reaktionstemperatur beibehalten zu können. Gleichzeitig kann vermieden werden, dass in Bereichen, in denen, sofern überhaupt, nur geringe Temperaturänderungen der Strömung zu erwarten sind, ein zu großer Wärmeaustausch vorgehalten wird. Dadurch kann in einer energieeffizienten Weise gezielt an entsprechend relevanten Stellen Einfluss auf die Reaktionsbedingungen genommen werden, um insbesondere einen gewünschten Temperaturverlauf und dadurch eine geeignete Molekulargewichtsverteilung des Polymerisationsproduktes zu erreichen. Die Reaktionsbedingungen der Polymerisation können besser kontrolliert und beeinflusst werden und die Einstellung einer gewünschten Molekulargewichtsverteilung hinsichtlich Lage, Breite und Form ist erleichtert.

Erfindungsgemäß wird durch den Schaber weiterhin vermieden, dass sich Verkrustungen, Anbackungen, Polymergele oder ähnliches an der Innenseite des Reaktorgehäuses bilden, die in einer unkontrollierbaren Art und Weise den Wärmeübergang über das Reaktorgehäuse beeinflussen. Zusätzlich führt die rotatorische Bewegung des Schabers und der Bewegung des Schaberblatts in Umfangsrichtung zu einer zusätzlichen Vermischung in radialer Richtung. Entlang der Mittelachse des Reaktorgehäuses können sich somit für jeden einzelnen Abschnitt im Wesentlichen homogene Reaktionsbedingungen ergeben. Gleichzeitig wird die Ausbildung von Strömungsgrenzschichten an der Innenseite des Reaktorgehäuses verhindert und der Wärmeübergang aufgrund der Strömungen in radialer Richtung deutlich verbessert. Durch die Drehbewegung des Schabers wird eine radiale Vermischung einer Strömung innerhalb des Reaktorgehäuses erreicht, die Schwerkrafteffekte dominiert, und eine Kolbenströmung innerhalb des Rohrreaktors ermöglicht. Dies erlaubt es, die Reaktionsbedingungen in axialer Richtung des Reaktorgehäuses vorherzusagen und individuell geeignete Reaktionsbedingungen entlang des Reaktorgehäuses einzustellen und zu kontrollieren, so dass sich insbesondere eine gewünschte Molekulargewichtsverteilung einstellen lässt.

Besonders bevorzugt ist das Reaktorgehäuse mit einer Fördereinrichtung zum Fördern von Edukten in das Reaktorgehäuse und/oder zum Fördern von Produkten aus dem Reaktorgehäuse verbunden, wobei die Förderleistung der Fördereinrichtung derart eingestellt ist, dass sich innerhalb des Reaktorgehäuses im Wesentlichen eine Kolbenströmung ausbildet. Durch die Kolbenströmung werden Rückvermischungen entgegen der Strömungsrichtung vermieden. Die Kolbenströmung kann dadurch ausgebildet werden, dass die Fördereinrichtung die Strömung entlang der geometrischen Mittelachse des Reaktorgehäuses durch das Reaktorgehäuse saugt und/oder drückt. Aufgrund des Schabers, der die Ausbildung von Grenzschichten an der Innenseite des Reaktorgehäuses verhindert, ist für die Kolbenströmung eine vergleichsweise geringe Strömungsgeschwindigkeit ausreichend. Dadurch lassen sich vergleichsweise hohe Verweilzeiten der Strömung im Rohrreaktor erreichen, ohne das kolbenförmige Profil der Strömung zu beeinträchtigen.

Unter Edukten werden die in den Rohrreaktor eintretenden Stoffe verstanden, während unter Produkten die aus den Rohrreaktor austretenden Stoffe verstanden werden. Beispiele für Edukte sind die zur Herstellung von synthetischen Kautschuken eingesetzte Monomere oder Monomergemische, die gegebenenfalls zur Polymerisation erforderlichen Katalysatoren sowie Lösungsmittel. Die Edukte können hierbei über einen gemeinsamen Einlass oder über mehrere unterschiedliche Einlässe insbesondere an verschiedenen axialen oder tangentialen Positionen in das Reaktorgehäuse des Rohrreaktors eingeleitet werden.

Vorzugsweise ist die Drehgeschwindigkeit und Form des Schabers derart eingestellt, dass zumindest in einem axialen Teilbereich des Reaktorgehäuses durch das Schaberblatt nur eine Geschwindigkeitskomponente in radialer Richtung und/oder in Umfangsrichtung auf eine Strömung im Reaktorgehäuse aufprägbar ist. Insbesondere ist im gesamten vom Schaberblatt überstrichenen Bereich des Reaktorgehäuses durch das Schaberblatt nur eine Geschwindigkeitskomponente in radialer Richtung und/oder in Umfangsrichtung auf eine Strömung im Reaktorgehäuse aufprägbar. Hierzu ist das Schaberblatt im Wesentlichen senkrecht zu seiner Bewegung in Umfangsrichtung ausgerichtet, um über den Leistungseintrag des Schabers keine zusätzliche Geschwindigkeitskomponente in oder entgegen der Strömungsrichtung des Rohrreaktors aufzuprägen. Das Schaberblatt kann im Wesentlichen parallel zur geometrischen Mittelachse des Reaktorgehäuses ausgerichtet sein. Gleichzeitig ist die Drehgeschwindigkeit des Schabers derart eingestellt, dass zu starke Turbulenzen, die signifikante Geschwindigkeitskomponenten entlang der Strömungsrichtung verursachen können, vermieden werden. Dadurch ergibt sich in Strömungsrichtung ein kalkulierbarer Verlauf der Reaktionsbedingungen, der bei einer kontinuierlichen Durchströmung des Rohrreaktors relativ zum Reaktorgehäuse konstant bleibt.

In einer bevorzugten Ausführungsform sind in axialer Richtung des Reaktorgehäuses mindestens zwei, vorzugsweise mindestens drei oder mindestens vier, Wärmetauscher zur Einstellung einer Temperatur einer innerhalb des Reaktorgehäuses vorgesehenen Strömung angeordnet, wobei die Wärmetauscher derart voneinander getrennt sind, dass für jeden Wärmetauscher eine unterschiedliche Temperatur einstellbar ist. Die Temperatur der Strömung innerhalb des Reaktorgehäuses kann von außerhalb des Reaktorgehäuses über die jeweiligen Wärmetauscher beeinflusst und eingestellt werden. In Abhängigkeit von dem zu erwartenden Verlauf der Reaktionsbedingungen innerhalb des Reaktorgehäuses kann für jeden Wärmetauscher individuell eine geeignete Temperatur gewählt werden, um beispielsweise unter Berücksichtigung der zu erwartenden Reaktionswärme eine konstante Temperatur innerhalb des Reaktorgehäuses vorzusehen. Es können auch Wärmetauscher in Reihe geschaltet werden, um den gesamten Massenstrom oder einen Teil des Massenstroms des einen Wärmetauschers dem anderen Wärmetauscher zuzuführen. Der andere Wärmetauscher kann insbesondere einen weiteren Zulauf zur Zufuhr eines Wärmetauschermedium mit einer von dem zugeführten Massenstrom des ersten Wärmetauschers verschiedenen Temperatur aufweisen. Trotz sich dynamisch ändernder Reaktionsbedingungen entlang des Strömungsweges innerhalb des Reaktorgehäuses kann somit die Temperatur innerhalb des Reaktorgehäuses im Wesentlichen konstant gehalten werden. Dies ermöglicht die Erreichung einer beabsichtigten Molekulargewichtsverteilung, die eine vergleichsweise geringe Streuung aufweist. Beispielsweise kann bei der Herstellung von synthetischen Kautschuken, die typischerweise bei -100 bis -30°C erfolgt, mit Hilfe von verdampfendem Ethylen oder anderen bei vorgenannten Temperaturen verdampfbaren Flüssigkeiten in Abhängigkeit vom gewählten Druck jede gewünschte Temperatur innerhalb des vorgenannten Bereichs eingestellt werden.

In einer weiteren Ausführungsform kann der Rohrreaktor zwei oder mehr jeweils über eine Zwischenplatte getrennte, aber über Durchtrittsöffnungen kommunizierende Reaktionsräume aufweisen, wobei in diesem Fall pro Reaktionsraum in axialer Richtung des Reaktorgehäuses mindestens ein, vorzugsweise mindestens zwei Wärmetauscher zur Einstellung einer Temperatur innerhalb jedes Reaktionsraumes angeordnet sind.

Ist der Rohrreaktor horizontal ausgerichtet ergibt sich zusätzlich für die verdampfende Flüssigkeit, wie beispielsweise Ethylen auch aufgrund des auftretenden hydrostatischen Drucks eine vergleichsweise schmale Sprudelschicht, so dass sich für den Wärmetauscher ein noch höherer Wärmeübergangseffizient erreichen lässt.

Das Reaktorgehäuse kann aus allen dem Fachmann bekannten Materialen gefertigt sein die unter den Reaktionsbedingungen eine ausreichende Festigkeit und Korrosionsbeständigkeit besitzen und behalten wie zum Beispiel handelsüblicher Stahl. Im Fall von Tieftemperaturanwendungen z.B. bei -100° bis - 30°C sind ist beispielsweise austenitischer Stahl geeignet.

Bevorzugt ist das Reaktorgehäuse aus Edelstahl 1.4571 oder ähnlichen in der chemischen Industrie gebräuchlichen und beständigen Stählen gefertigt.

Vorzugsweise besteht die Innenseite des Reaktorgehäuses, die mit dem Reaktionsmedium in Kontakt kommt, aus Edelstahl 1.4404 mit reduziertem Ti-Anteil für bessere Poliereigenschaften der Innenfläche.

Vorzugsweise weist der Wärmetauscher einen ein Teil des Reaktorgehäuses umschließenden Außenmantel auf, wobei vorzugsweise zwischen dem Außenmantel und dem Reaktorgehäuse eine spiralförmige Trennwand zur Ausbildung eines spiralförmigen Wärmetauscherkanals angeordnet ist. Durch eine konstruktiv einfache umzusetzende Maßnahme, lässt sich erreichen, dass ein Wärmetauschermedium spiralförmig an dem Reaktorgehäuse entlang fließt und dadurch entsprechend lange Wärme mit der Strömung innerhalb des Reaktorgehäuses austauschen kann. Dies ermöglicht einen besonders großen Wärmestrom, der zwischen der Strömung innerhalb des Reaktorgehäuses und dem Wärmetauschermedium ausgetauscht werden kann. Eine derartige Ausgestaltung des Wärmetauschers mit einem spiralförmigen Wärmetauscherkanal bietet sich insbesondere für einphasige Wärmetauschermedien an, die bei der Aufnahme und/oder Abgabe von Wärme einen Phasenwechsel, beispielsweise Verdampfung und/oder Kondensation nicht durchführen. Bei Wärmetauschermedien, die bei der Aufnahme und/oder Abgabe von Wärme einen Phasenwechsel, beispielsweise Verdampfung und/oder Kondensation durchführen, wird insbesondere die Trennwand weggelassen, so dass sich innerhalb des Wärmetauschers durch den Phasenwechsel eine möglichst hohe Turbulenz ausbilden kann. Gleichzeitig wird die innere Begrenzung des Wärmetauschers durch das Reaktorgehäuse selbst ausgebildet. Ein zusätzlicher Wärmewiderstand zwischen der Strömung innerhalb des Reaktorgehäuses und dem Wärmetauscher wird dadurch vermieden. Das Wärmetauschermedium kann beispielsweise im Gegenstrom zur Strömung innerhalb des Reaktorgehäuses durch den spiralförmigen Wärmetauscherkanal geleitet werden oder aber in Strömungsrichtung, z.B. wenn eine hohe Kühlleistung zu Beginn der Polymerisation, d.h. stromaufwärts, erforderlich ist.

Besonders bevorzugt beträgt ein Verhältnis einer Innenfläche A des rohrförmigen Reaktorgehäuses zu einem Volumen V des rohrförmigen Reaktorgehäuses 0,1 m²/m³ ≤ A/V ≤ 100 m²/m³ bevorzugt 1 m²/m³ ≤ A/V ≤ 50 m²/m³, besonders bevorzugt 5 m²/m³ ≤ A/V ≤ 30 m²/m³, ganz besonders bevorzugt 10 m²/m³ ≤ A/V ≤ 30 m²/m³. Aufgrund des Schabers, der die Ausbildung von Grenzschichten an der Innenseite des Reaktorgehäuses verhindert, ist es möglich, einen vergleichsweise schlanken Rohrreaktor vorzusehen, dessen Reaktorgehäuse bezogen auf das umschlossene Volumen eine vergleichsweise große Innenfläche aufweist. Aufgrund der vergleichsweise großen Innenfläche A des rohrförmigen Reaktorgehäuses kann eine entsprechend hohe Wärmetauscherleistung über die Außenseite des Reaktorgehäuses installiert werden. Gleichzeitig lässt sich eine im Wesentlichen homogene Temperaturverteilung in radialer Richtung leichter erreichen. Gleichzeitig kann der Rohrreaktor größeren Innendrücken standhalten. Dies ermöglicht es, die Reaktionsparameter auch über einen größeren Druckbereich einzustellen und zu kontrollieren.

In einer bevorzugten Ausführungsform weist der Schaber mindestens zwei, bevorzugt 2 bis 8 Teilschaber auf, wobei die Teilschaber in axialer Richtung gelenkig, beispielsweise über dem Fachmann hinreichend bekannte Lagervorrichtungen, wie beispielsweise über ein sich am Reaktorgehäuse abstützendes Mehrbein wie zum Beispiel ein Dreibein, miteinander verbunden sind. Der Schaber kann dadurch in mehrere kleinere Teile unterteilt werden, die aufgrund der gelenkigen Verbindung miteinander dem Formverlauf des rohrförmigen Reaktorgehäuses leichter folgen können. Insbesondere ist es möglich, Verformungen des Reaktorgehäuses, insbesondere Biegungen aufgrund von Wärmedehnungseffekten folgen zu können, auch ohne dass das Schaberblatt in eine Schrägstellung zur Innenseite des Reaktorgehäuses gelangt. Beispielsweise kann mit Hilfe von drei Beinen des Dreibeins, die sich an drei Stellen an der Innenseite des Reaktorgehäuses abstützen können, sichergestellt werden, dass der jeweilige Teilschaber zwischen zwei Dreibeinen mittig angeordnet ist. Das Dreibein kann unbeweglich oder mit dem Schaber zumindest teilweise mitdrehend ausgestaltet sein. Wenn sich das Reaktorgehäuse aufgrund von Wärmedehnungseffekten verbiegen sollte, wird automatisch der jeweilige Teilschaber an den neuen Formverlauf angepasst. Selbst bei einem durch Wärmedehnungseffekte leicht gekrümmten Verlauf des Reaktorgehäuses wird durch den Schaber eine kolbenförmige Pfropfenströmung nicht signifikant gestört.

Der oder die Schaber sind über den Antrieb antreibbar, wobei die Kraftübertragung durch mechanische oder magnetische Kupplung bewerkstelligt werden kann.

Bei der Verwendung von Wellen zur mechanischen Kraftübertragung sind diese vorzugsweise über eine zwischen der Welle und dem Reaktorgehäuse angeordnete doppelwirkende Gleitringdichtung abgedichtet, wobei die Gleitringdichtung insbesondere ein für unter den Polymerisationsbedingungen inertes Sperrmedium enthält. Die Gleitringdichtung kann zwischen ihren beiden Gleitflächen einen Ringkammerraum einschließen, der mit der Sperrflüssigkeit gefüllt sein kann. Die insbesondere unter Druck stehende Sperrflüssigkeit kann dabei beide Gleitringpaarungen schmieren. Dadurch wird vermieden, dass sich Edukte und/oder Produkte an den Gleitflächen anlagern und Undichtigkeiten verursachen können. Bei der Herstellung von synthetischen Kautschuken kann das Eindringen von Wasser, wie beispielsweise von Luftfeuchtigkeit aus der Umgebungsluft, in das Innere des Reaktorgehäuses vermieden werden. Eine Verlangsamung der Polymerreaktion innerhalb des Reaktorgehäuses durch Wassereintritt und gegebenenfalls damit verbundener Katalysatordeaktivierung wird dadurch vermieden. Als Sperrmedium kann beispielsweise ein Lösungsmittel verwendet werden, das auch bei der Polymerisationsreaktion eingesetzt wird.

Vorzugsweise weist das Schaberblatt eine Oberfläche mit einem im Vergleich zu Stahl geringeren Reibungskoeffizienten auf, wobei das Schaberblatt beispielsweise aus fluorhaltigen Polymeren und/oder ähnlichen Materialen wie zum Beispiel Polyetheretherketon (PEEK) besteht, sie enthält oder damit beschichtet ist, vorzugsweise aus fluorhaltigen Polymeren besteht oder damit beschichtet ist. Bevorzugte fluorhaltige Polymere sind Polytetrafluorethylen (PTFE), Polyvinylidenfluorid (PVDF) und Ethylen-Tetrafluorethylen-Copolymer (ETFE).

Durch die geringere Reibung zwischen dem Schaberblatt und der Innenseite des Reaktorgehäuses können Reibungsverluste beim Betrieb des Schabers reduziert werden. Gleichzeitig kann insbesondere bei höheren Drehzahlen des Schabers das Ausmaß von Reibungswärme an der Innenseite des Reaktorgehäuses reduziert werden. Insbesondere kann die Oberfläche des Schaberblatts derart beschaffen sein, dass abgeschabtes Gel nicht bevorzugt an dem Schaberblatt anliegt, sondern sich schnell von dem Schaberblatt ablöst. Das abgeschabte Gel kann dadurch leicht wieder der Strömung zugeführt und in der Strömung suspendiert werden.

Vorzugsweise ist das Schaberblatt zu einer durch die geometrische Mittelachse verlaufende radial ausgerichtete Linie geneigt und/oder gebogen, wobei das Schaberblatt einen radial nach innen ausgerichteten Befestigungskopf aufweist und auf das Schaberblatt, insbesondere auf den Befestigungskopf, eine nach radial außen gerichtete Kraft aufprägbar ist. Die Aufprägung kann beispielsweise durch Federkraft, hydraulische Kräfte, elastische Kräfte oder durch Fliehkräfte oder mehrere der vorgenannten Kräfte erfolgen. Durch die geneigte bzw. gebogene Ausrichtung des Schaberblatts im Bereich des Kontakts zur Innenseite des Reaktorgehäuses wird vermieden, dass das polymerisierte Produkt einen Spalt zwischen dem Schaberblatt und dem Reaktorgehäuse verstopft oder verklebt. Unnötig hohe Drehmomente für den Schaber werden dadurch vermieden. Durch die radial nach außen weisende Kraft kann eine genügend hohe Anpresskraft des Schaberblatts an das Reaktorgehäuse aufgeprägt werden, um Ablagerungen, insbesondere Gel, von der Innenseite des Reaktorgehäuses abzuschaben. Gleichzeitig kann das Schaberblatt nach radial innen ausweichen, um bei Unebenheiten des Reaktorgehäuses und/oder zu festen Ablagerungen die Drehung des Schabers nicht zu blockieren. Durch die gebogene bzw. geneigte Ausrichtung des Schaberblatts, kann insbesondere eine Ausweichbewegung des Schaberblatts vorsehen sein, die nur teilweise in radialer Richtung erfolgt und einen Bewegungsanteil seitlich zur radialen Richtung aufweist. Zusätzlich oder alternativ kann das Schaberblatt angefast sein. Dadurch wird ein Anschlagen des Schaberblatts an einer festen Verkrustung, die zu einem Blockieren des Schabers fuhren kann, vermieden, da das Schaberblatt aufgrund der ausgebildeten Schräge über die Verkrustung entgegen der nach radial nach außen aufgebrachten Kraft gehoben werden kann.

Insbesondere sind in axialer Richtung mindestens zwei Schaberblätter angeordnet, wobei die Schaberblätter um einen Winkel α in Umfangsrichtung versetzt sind und der Winkel α insbesondere 30° ≤ α ≤ 150°, vorzugsweise 45° ≤ α ≤ 135°, weiter bevorzugt 60° ≤ α ≤ 120° und besonders bevorzugt α = 90°±2° beträgt. Durch die versetzte Anordnung der Schaberblätter ergeben sich für den Schaber mehrere Abstützpunkte an der Innenseite des Reaktorgehäuses, die ein Durchhängen einer Antriebswelle des Schabers und/oder ein Schwingen der Antriebswelle des Schabers vermeiden.

Vorzugsweise sind in Umfangsrichtung mindestens zwei, vorzugsweise mindestens drei oder mindestens vier, Schaberblätter in gleichmäßigem Abstand zueinander hintereinander angeordnet. Bei zwei Schaberblättern ergibt sich in Umfangsrichtung ein Winkel β = 180° ± 5°, bei drei Schaberblättern ein Winkel β = 120° ± 5°, bei vier Schaberblättern ein Winkel β = 90° ± 5° und so weiter. Dies führt zu einer zusätzlichen Zentrierung der Antriebswelle des Schabers.

In einer weiteren Ausführungsform ist der Rohrreaktor stromaufwärts mit zumindest einer Mischkammer verbunden, die ein die Mischkammer umschließendes Gehäuse und zumindest ein innerhalb der Mischkammer angeordnetes Mischelement aufweist.

Geeignete Mischelemente sind dem Fachmann hinlänglich bekannt und umfassen statische oder bewegliche, vorzugsweise bewegliche Mischelemente. Besonders bevorzugt weist die Mischkammer einen Impeller auf. Der besondere Vorteil einer vorgeschalteten Mischkammer liegt darin, dass die Edukte vor dem Eintritt in den erfindungsgemäßen Rohrreaktor mit einer hohen Mischungsenergie durchmischt werden können womit die bei typischerweise bei tiefen Temperaturen vorliegenden, viskosen Reaktionsmischungen beobachtete Schlierenbildung weitestgehend vermieden werden kann. Schlierenbildung führt häufig in unerwünschter Weise zu lokalen Hotspots, inhomogenem Reaktionsverlauf oder vermehrten Nebenreaktionen. Die Dimensionierung der Mischkammer und der Mischelemente ist vorzugsweise derart aufeinander abgestimmt, dass eine durchschnittliche Verweilzeit in der Mischkammer zwischen 1 und 120 s, vorzugsweise zwischen 2 und 60 s, besonders bevorzugt zwischen 2 und 20 s und ein möglichst hoher hoher Grad an Homogenisierung unter den Reaktionsbedingungen erreicht werden kann. Typische Mischleistungen, die dafür erforderlich sind können beispielsweise im Bereich von 0,001 bis 1 kW/l liegen.

In einer bevorzugten Ausführungsform sind in axialer Richtung des die Mischkammer umschließenden Gehäuses mindestens ein weiterer Wärmetauscher zur Einstellung einer Temperatur einer innerhalb der Mischkammer vorgesehenen Strömung angeordnet, wobei die vorgenannten besonderen Ausführungsformen für Wärmetauscher gleichermaßen gelten.

Vorzugsweise ist das die Mischkammer umschließende Gehäuse mit dem Reaktorgehäuse durch eine Zwischenplatte mit Durchtrittsöffnungen für das Reaktionsgemisch verbunden.

Die Erfindung betrifft ferner die Verwendung des vorstehend beschriebenen Rohrreaktors, der wie vorstehend beschrieben aus- und weitergebildet sein kann, zur Herstellung von synthetischen Kautschuken durch Polymerisation von polymerisierbaren Monomeren innerhalb des Reaktorgehäuses.

Unter synthetischen Kautschuken sind im Rahmen der Erfindung nicht natürlich vorkommende elastomere zu verstehen. Bevorzugte synthetische Kautschuke sind Butyl-Kautschuk, Polybutadien (BR) und Poly-Styrol-Butadien (SBR), Ethylen-Propylen-Dien-Kautschuk (EPDM), Poly-Acrylnitril-Butadien-Kautschuk (NBR), hydrierter Poly-Acrylnitril-Butadien-Kautschuk (H-NBR), Fluorkautschuke (FKM), Polychloropren (CR) und Polyethylen-VinylAcetat (EVA bzw. EVM) zu verstehen, wobei vorgenannte synthetischen Kautschuke beispielsweise eine Molmasse von 5,000 bis 5,000,000 g/mol aufweisen können.

Besonders bevorzugte synthetische Kautschuke sind Butyl-Kautschuk und Polybutadien (BR), ganz besonders bevorzugt Butyl-Kautschuk mit einer Molmasse von 300,000 bis 1,000,000 g/mol und Polybutadien (BR) mit einer Molmasse von 5,000 bis 1,000,000 g/mol, wobei Butyl-Kautschuk mit einer Molmasse von 300,000 bis 1,000,000 g/mol noch weiter bevorzugt ist.

Butyl-Kautschuk ist ein Copolymer von Isobuten (2-Methylpropen) und Isopren (2-Methylbuta-1,3-dien). Der Anteil von Wiederholungseinheiten im Butylkautschuk, die sich von Isopren ableiten, liegt beispielsweise zwischen >0% und 5 %, vorzugsweise zwischen 1.8 und 2.3 mol %.

Die Polymerisation erfolgt typischerweise als Copolymerisation von Isobuten und Isopren bei Temperaturen von -100°C bis -30°C, vorzugsweise -100°C und -60°C in Gegenwart eines Katalysators. Als Lösungsmittel können beispielsweise für den sogenanten "Slurry-Prozess" Chlormethan für den sogenannten "Solution-Prozess" Kohlenwasserstoffe wie insbesondere offenkettige oder cyclische, verzweigte oder unverzweigte Pentane, Hexane oder Heptane oder Mischungen davon eingesetzt werden, wobei vorgenannte Pentane und Hexane oder Mischungen davon bevorzugt sind.

Als Katalysatoren können je nach Prozessführung in an sich bekannter Weise Aluminiumchlorid oder Aluminiumalkylhalogenide wie beispielsweise Diethylaluminiumchlorid, Ethylaluminiumdichlorid, Dimethylaluminiumchlorid Methylaluminiumdichlorid oder Mischungen davon eingesetzt werden. Der Katalysator oder die Katalysatoren werden beispielsweise mit geringen Mengen protischer Lösungsmittel wie beispielsweise Wasser oder aliphatischen Alkoholen wie Methanol aktiviert und den zu polymerisierenden Monomeren im Lösungsmittel suspendiert oder gelöst zugegeben, wobei als Lösungsmittel vorzugsweise das Lösungsmittel verwendet wird in dem die Polymerisation stattfindet.

Aufgrund der konstruktiven Ausgestaltung der Rohrreaktors lassen sich die Reaktionsbedingungen innerhalb des Rohrreaktors entlang der Länge des Rohrreaktors gut vorhersehen und entsprechend leicht beeinflussen und kontrollieren. Insbesondere zu Beginn der Polymerisationsreaktion, wenn vergleichsweise viel Edukt und nur wenig Produkt vorliegt, ist die Viskosität der Strömung mit typischerweise ≤ 1mPas besonders gering. Viskositäten werden, wenn nicht anderweitig angegeben, mittels Kapillarviskosimetrie bei einer Temperatur von 23°C nach ISO 1628 bestimmt oder darauf bezogen. Gleichzeitig entsteht aufgrund der hohen Anzahl an Reaktionspartner besonders viel Reaktionswärme, die über das Reaktorgehäuse abgeführt werden kann. Da eine Rückströmung von polymerisiertem Produkt vermieden werden kann, ist es möglich, die Viskosität in einem Bereich besonders niedrig zu halten, in dem eine besonders hohe Wärmeabfuhr erforderlich ist. Aufgrund der niedrigen Viskosität in diesem Bereich lässt sich ein Wärmetransport in radialer Richtung besonders einfach realisieren, wobei in Zusammenwirkung mit dem Schaber ein Wärmeübergangskoeffizienten k von einigen Hundert W/m²K erreicht werden kann. Dadurch ist es insbesondere möglich, im Bereich des Reaktorgehäuses, in dem die größte Wärmeentwicklung stattfindet, bei der Kühlung der Strömung mit einem treibendem Temperaturgefälle von bis zu 20 K auszukommen. Zum Auslass des Rohrreaktors hin nimmt die Viskosität der Strömung deutlich zu und kann einige Hundert mPas erreichen, so dass sich ein schlechter Wärmeübergangskoeffizient ergibt als im Bereich des Einlasses des Rohrreaktors. Der schlechtere Wärmeübergangskoeffizient entsteht allerdings in einem Bereich, in dem sofern überhaupt nur noch in einem geringeren Ausmaß eine Polymerreaktion stattfindet, so dass eine deutlich geringere Wärmemenge bei der Polymerisation entsteht, die abgeführt werden müsste. Aufgrund der geringeren abzuführenden Wärmemengen wirkt sich die höhere Viskosität der schlechteren Wärmeübergangskoeffizient nicht signifikant nachteilig auf die Kühlung der Strömung aus.

Die Erfindung betrifft ferner ein Verfahren zur kontinuierlichen Herstellung von Polymeren, bevorzugt synthetischen Kautschuken unter Verwendung, eines Rohrreaktor, der wie vorstehend beschrieben aus- und weitergebildet sein kann. Die Erfindung betrifft ferner die Verwendung des Rohrreaktors zur Herstellung von Polymeren, bevorzugt synthetischen Kautschuken.

In einer Ausführungsform des Verfahrens wird zur kontinuierlichen Herstellung von Polymeren bevorzugt synthetischen Kautschuken im Rohrreaktor eine im Wesentlichen eine entlang der geometrischen Mittelachse des Reaktorgehäuses, vorzugsweise in horizontaler Richtung verlaufende Kolbenströmung der Edukte und der Produkte aufgeprägt. Ein bei der Polymerisation sich an einer Innenseite eines Reaktorgehäuses des Rohrreaktors gegebenenfalls ablagernde Feststoffe oder Gele werden durch die Rotationsbewegung des Schabers und der Schaberblätter abgeschabt. Durch das Abschaben des Gels von der Innenseite des Reaktorgehäuses wird eine Verschlechterung des Wärmeübergangskoeffizienten der Strömung innerhalb des Reaktorgehäuses und dem Reaktorgehäuse über der Zeit vermieden. Dies führt zu konstanten Randbedingungen, die für einen kontinuierlichen Betrieb des Rohrreaktors vorteilhaft sind. Gleichzeitig wird durch das Schaben ein guter Wärmeübergang zwischen der Strömung und dem Reaktorgehäuse gewährleistet. Durch die horizontale Kolbenströmung ist es möglich, Schwerkrafteffekte in der Strömung, wie beispielsweise bei einer Schlaufenströmung, weitestgehend zu eliminieren, da der durch den Schaber aufgeprägte Strömungsanteil in radialer Richtung Schwerkrafteffekte deutlich überwiegt. Dies ermöglicht über die Länge des Rohrreaktors in Strömungsrichtung einen vorhersehbaren Reaktionsverlauf, der an vorher zu bestimmenden Stellen gezielt kontrolliert und beeinflusst werden kann. Dies ermöglicht es insbesondere, ein gewünschtes Molekulargewicht mit einer vergleichsweise schmalen Streuung zu erreichen. Für das Molekulargewicht wird, sofern nicht anderweitig angegeben, die gewichtsmittlere Molmasse M_{w}, bestimmt durch Gelpermeationschromatographie (GPC), verwendet. Insbesondere lässt sich über eine bereichsbezogene individuell eingestellte Kühlung des Rohrreaktors die Molekulargewichtsverteilung bezüglich ihrer Lage, Breite und Form einstellen und modifizieren.

Besonders bevorzugt werden in Strömungsrichtung unterschiedliche Wärmetauschertemperaturen zur Einstellung eines vordefinierten Molekulargewichts unter Berücksichtigung der bei der Polymerisation auftretenden Wärmebilanzen, Verweilzeiten und Konzentrationen aufgeprägt. Insbesondere ist es möglich, unter Berücksichtigung der Kinetik der Polymerisationsreaktion die entlang des Rohrreaktors auftretenden Wärmemengen zu berechnen, um insbesondere eine konstante Temperatur der Strömung einzustellen. Durch die in Strömungsrichtung unterschiedlichen Wärmetauschertemperaturen kann für jeden Bereich in axialer Richtung des Rohrreaktors die auftretende Reaktionswärme bei einer exothermen Reaktion abgeführt bzw. bei einer endothermen Reaktion zugeführt werden. Bei einer endothermen Reaktion ergibt sich bei der Wärmebilanz eine negative Reaktionswärme, während sich bei einer exothermen Reaktion bei der Wärmebilanz eine positive Reaktionswärme ergibt.

Besonders bevorzugt erfolgt das Abschaben des Gels mit einer Geschwindigkeit v an der Innenseite eines Reaktorgehäuses von 0,05 m/s ≤ v ≤ 10m/s, vorzugsweise 0,5 m/s ≤ v ≤ 6 m/s, besonders bevorzugt 1 m/s ≤ v ≤ 4 m/s und ganz besonders bevorzugt 2 m/s ≤ v ≤ 3 m/s . Bei derartigen Geschwindigkeiten v, mit denen ein Schaberblatt an der Innenseite des Reaktorgehäuses entlanglaufen kann, wird vermieden, dass sich ein signifikant dicker Belag durch Feststoff- oder Gelbildung an der Innenseite des Reaktorgehäuses ergibt. Gleichzeitig kann bei derartigen Geschwindigkeiten des Schaberblatts in Umfangsrichtung ein hinreichend großer Massentransport in radialer Richtung aufgeprägt werden, der zu einer guten homogenen Mischung der Strömung in radialer Richtung führt und den Wärmeübergang zwischen der Strömung und dem Reaktorgehäuse verbessert.

Bei Verwendung einer vorgeschalteten Mischkammer beträgt die durchschnittliche Verweilzeit in der Mischkammer beispielsweise zwischen 1 und 120 s, vorzugsweise zwischen 2 und 60 s, besonders bevorzugt zwischen 2 und 20 s.

Bei Verwendung einer vorgeschalteten Mischkammer beträgt die durchschnittlich aufgenommene Mischenergie beispielsweise zwischen 0,001 und 120 J/l.

Nachfolgend wird die Erfindung unter Bezugnahme auf die anliegenden Zeichnungen anhand bevorzugter Ausführungsbeispiele näher erläutert.

Es zeigen:
- Fig. 1:: eine schematische Seitenansicht eines Rohrreaktors,
- Fig. 2:: eine schematische Schnittansicht des Rohrreaktors aus Fig. 1,
- Fig. 3:: eine schematische Detailansicht des Rohrreaktors aus Fig. 2,
- Fig. 4:: eine schematische Detailansicht eines Schabers für den in Fig. 1 dargestellten Rohrreaktor und
- Fig. 5:: eine schematische Schnittansicht eines Schaberblatts für den Schaber aus Fig. 4.
- Fig. 6:: eine schematische Seitenansicht eines weiteren Rohrreaktors ohne Mittelwelle
- Fig. 7:: eine schematische Seitenansicht eines weiteren Rohrreaktors mit vorgeschalteter Mischkammer
- Fig.8:: eine schematische Seitenansicht eines weiteren Rohrreaktors mit vorgeschalteter Mischkammer und zweitem Reaktorraum
- Fig. 9:: eine schematische Querschnittsansicht eines Rohrreaktors

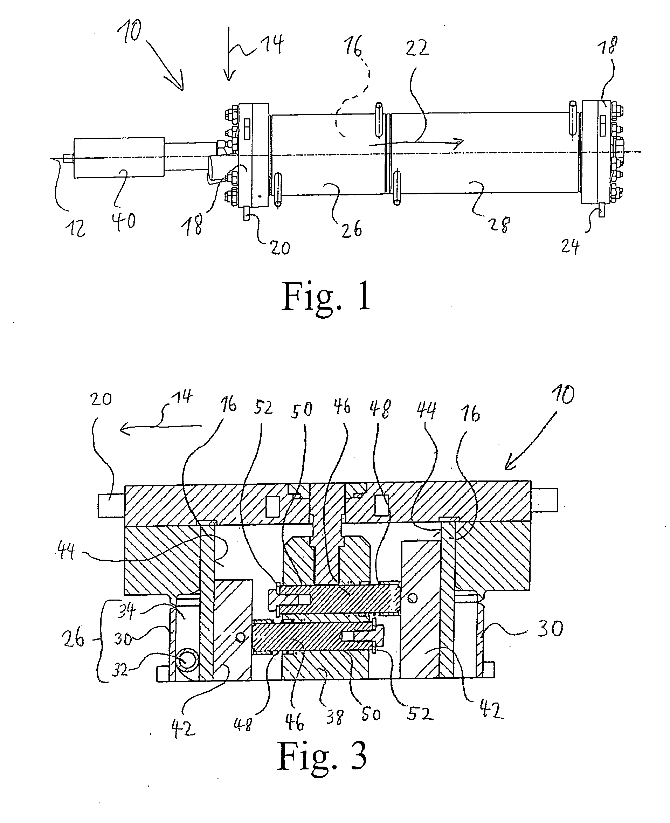

Der in Fig. 1 dargestellte Rohrreaktor 10 weist eine geometrische Mittelachse 12 auf, die senkrecht zu einer Schwerkraftrichtung 14, das heißt horizontal, ausgerichtet ist. Der Rohrreaktor 10 weist ein rohrförmiges Reaktorgehäuse 16 auf, das stirnseitig über angeflanschte Stirnplatten 18 geschlossen ist. Über mindestens einen Einlass 20 können Edukte in das rohrförmige Reaktorgehäuse 16 eingeleitet werden, wobei die Polymerisationsreaktion entlang einer Strömungsrichtung 22 erfolgt. Über einen Auslass 24 kann das entstandene Produkt den Rohrreaktor 10 verlassen. Innerhalb des Reaktorgehäuses 16 bildet sich für die Strömung eine Kolbenströmung aus, die in radialer Richtung im Wesentlichen einen gleich großen Geschwindigkeitsvektor in Strömungsrichtung 22 aufweist. Der Rohrreaktor 10 wird somit kontinuierlich zur Durchführung einer kontinuierlichen Polymerisation betrieben.

Die bei der Polymerisation entstehende Reaktionswärme kann über einen ersten Wärmetauscher 26 und ein in axialer Richtung neben dem ersten Wärmetauscher 26 angeordneten zweiten Wärmetauscher 28 abgeführt werden. Da zu Beginn des Reaktorgehäuses 16, das heißt stromaufwärts, eine intensivere Reaktion stattfindet als zum Ende des Reaktorgehäuses 16, das heißt stromabwärts, stattfindet, entsteht zu Beginn des Reaktorgehäuses 16 pro Längeneinheit in Strömungsrichtung 22 ein höherer Wärmestrom stromauf- als stromabwärts. Der erste Wärmetauscher 26 ist daher für eine entsprechend hohe Wärmeübertragerleistung ausgestaltet. Zusätzlich oder alternativ kann der erste Wärmetauscher 26 eine kürzere Strecke in axialer Richtung kühlen als der zweite Wärmetauscher 28. Aufgrund der innerhalb des Reaktorgehäuses 16 in Strömungsrichtung 22 einstellbare Kolbenströmung kann die Wärmetauscherleistung, die axiale Erstreckung, das verwendete Wärmetauschermedium sowie Druck und Temperatur des Wärmetauschermediums individuell auf die innerhalb der sich in Strömungsrichtung 22 verändernden Reaktionsbedingungen angepasst werden, so dass für jeden Abschnitt in Strömungsrichtung 22 eine geeignete Kühlleistung eingestellt werden kann. Dies ermöglicht es insbesondere, innerhalb des Rohrreaktors 10 eine im Wesentlichen konstante Temperatur einzustellen, die zu einem Polymerisationsprodukt führt, das eine gewünschte Molekulargewichtsverteilung aufweist.

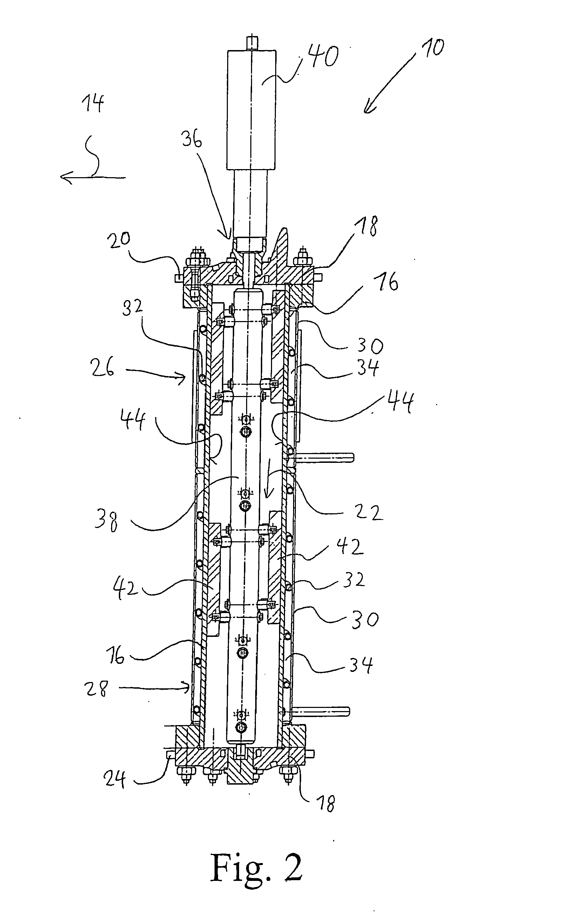

Wie in Fig. 2 dargestellt, weisen die Wärmetauscher 26, 28 jeweils einen Außenmantel 30 auf, der zusammen mit dem Reaktorgehäuse 16 das Volumen des Wärmetauschers 26, 28 begrenzt. Zwischen dem Außenmantel 30 und dem Reaktorgehäuse 16 ist eine spiralförmige Trennwand 32 in Form eines gewundenen Rohres vorgesehen, die einen spiralförmigen Wärmetauscherkanal 34 begrenzt. Bei der Verwendung eines Wärmetauschermediums, des im Betrieb einen Phasenwechsel durchführt, beispielsweise verdampfendes Ethylen, kann die Trennwand 32 entfallen. Der Rohrreaktor 10 weist ferner einen Schaber 36 auf, der einen Antrieb 38 aufweist, die von einem Motor 40 angetrieben wird. Mit dem Antrieb 38 sind mehrere Schaberblätter 42 verbunden, von denen im dargestellten Ausführungsbeispiel jeweils zwei paarweise gegenüberliegend angeordnet sind. Es können aber auch mehrere Schaberblätter 42, insbesondere drei Schaberblätter 42 regelmäßig in Umfangsrichtung hintereinander angeordnet sein. Im dargestellten Ausführungsbeispiel sind in axialer Richtung benachbarte Paare von Schaberblättern 42 um 90° in Umfangsrichtung versetzt angeordnet. Die Schaberblätter 42 kontaktieren eine Innenseite 44 des Reaktorgehäuses 16, um insbesondere Verkrustungen oder Gelbildungen von der Innenseite 44 abschaben zu können.

Wie in Fig. 3 dargestellt, weisen die Schaberblätter 42 einen Befestigungskopf 46 auf, der sich über eine Feder 48 vom Antrieb 38 abstützt. Dadurch kann von den Schaberblättern 42 eine axiale Federkraft auf die Innenseite 44 des Reaktorgehäuses 16 aufgebracht werden. Der Befestigungskopf 46 ist hierbei in einer Bohrung 50 eingesteckt und stirnseitig über einen verschraubten Deckel 52 verliersicher gehalten.

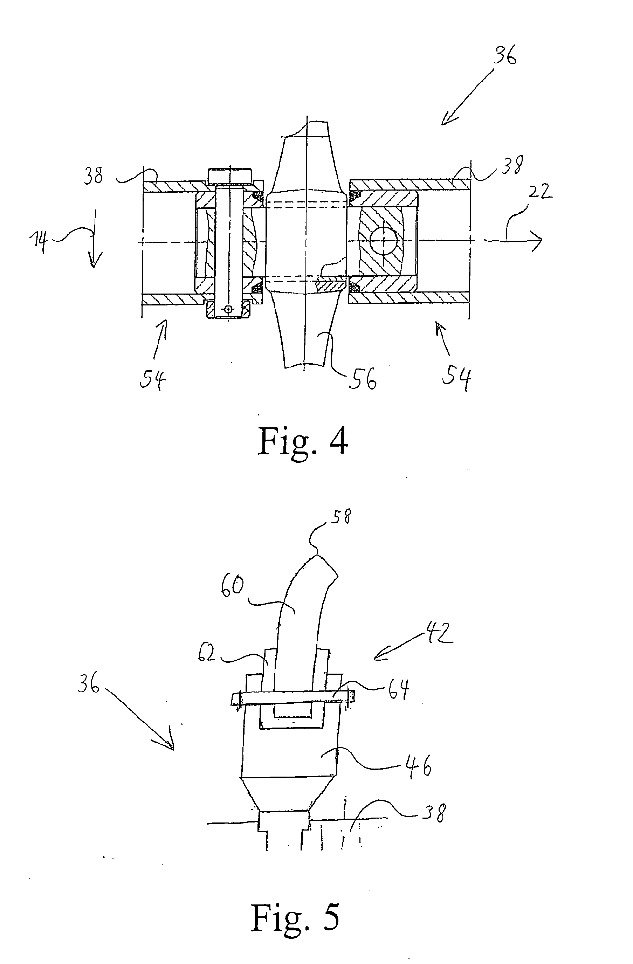

Wie in Fig. 4 dargestellt, kann der Schaber 36 mehrere Teilschaber 54 aufweisen, die insbesondere über ein teilweise dargestelltes Dreibein 56, insbesondere gelenkig miteinander verbunden sein können. Durch die gelenkige Verbindung kann der Schaber 36 beispielsweise durch Wärmedehnung verursachte Biegungen des Reaktorgehäuses 16 ausgleichen und einen im Wesentlichen parallelen Kontakt des Schaberblatts 42 mit der Innenseite 44 des Reaktorgehäuse 16 gewährleisten.

Wie in Fig. 5 dargestellt, kann das Schaberblatt 42 an seinem radial nach außen gerichteten Ende geneigt und/oder gebogen sein. Dadurch ergibt sich eine linienförmige Schaberkante 58, die an der Innenseite 44 des Reaktorgehäuses 16 entlanglaufen, d. h. entlang gleiten kann. Das Schaberblatt 42 weist insbesondere ein mit PTFE beschichtetes gebogenes Schaberelement 60 auf, das in einem Halteelement 62 aus Edelstahl eingespannt ist und über einen gesicherten Haltestift 64 mit dem Befestigungskopf 46 verbunden ist.

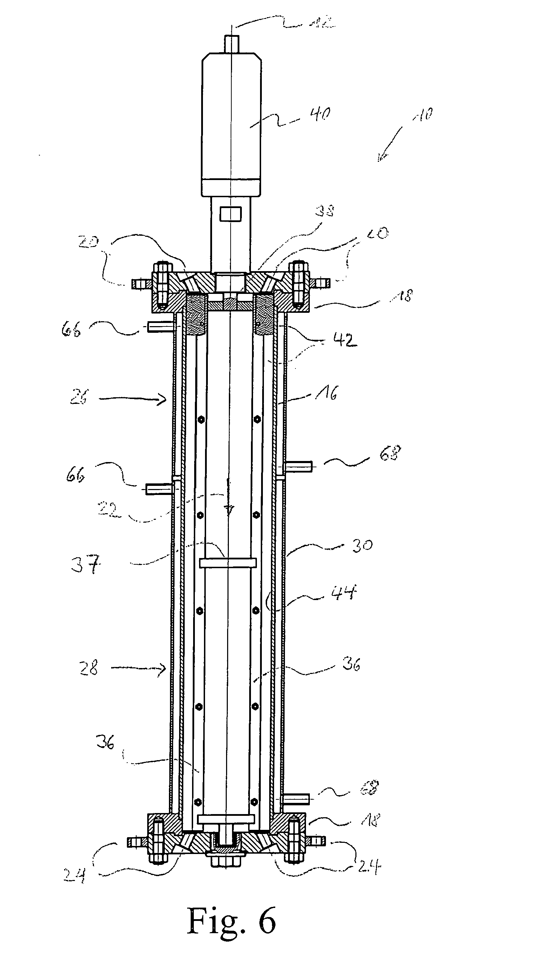

Wie in Fig. 6 dargestellt, sind mit dem Antrieb 38 mehrere Schaber 36 derart verbunden, dass die Kraftübertragung auf die Schaber 36 ohne Mittelwelle erfolgt. Die Oberfläche einer Mittelwelle stellt eine nicht geschabte Oberfläche mit relativ zur Schabergeschwindigkeit geringen Umlaufgeschwindigkeit dar. Das Fehlen einer solchen Oberfläche hat den Vorteil dass insgesamt weniger Anhaftungen von unerwünschten Gelen oder Feststoffen zu beobachten sind. Zur mechanischen Stabilisierung der Schaber können diese über ein oder mehrere Verbindungselemente 37 verbunden sein. Die konstruktive Ausgestaltung hängt dabei unter anderem von der gewählten Reaktorgeometrie sowie der Umlaufgeschwindigkeit der Schaber ab und kann in einer für den Fachmann bekannten Weise leicht optimiert werden.

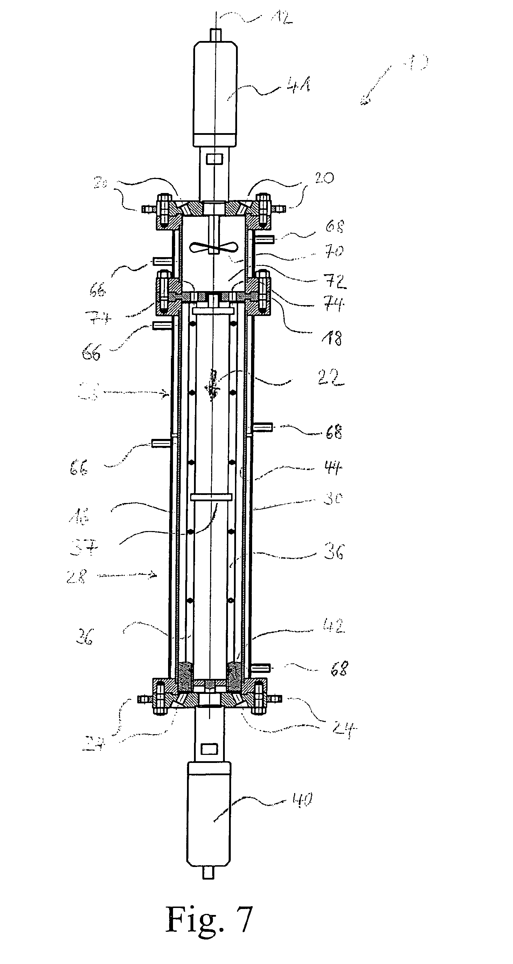

Wie in Fig. 7 dargestellt, weist der Rohrreaktor 10 stromaufwärts d.h. vorgeschaltet eine Mischkammer 72 auf, die ein die Mischkammer umschließendes Gehäuse und ein innerhalb der Mischkammer angeordnetes Mischelement 70 aufweist, der hier als Impeller ausgestaltet ist, der über einen Motor 41 angetrieben wird. Die Mischkammer weist ebenfalls einen Aussenmantel auf, der das Volumen eines Wärmetauschers begrenzt, wobei über den Einlass 66 Wärmetauschermedium in den Wärmetauscher eingeführt werden kann, dass über den Auslass 68 des Wärmetauschermediums wieder entnommen werden kann, so dass die Mischkammer separat gekühlt oder geheizt werden kann. Bei der Herstellung von synthetischen Kautschuken findet typischerweise eine Kühlung auf eine Temperatur im Bereich von -100° bis -30°C statt. Die Mischkammer ist in Strömungsrichtung von der Stirnplatte 19 des Rohrreaktors begrenzt, wobei der Stofftransport von der mischkammer 72 in den Innenraum des Rohrreaktors jedoch durch eine oder mehrere, hier dargestellt zwei Durchtrittsöffnungen 74 erfolgen kann.

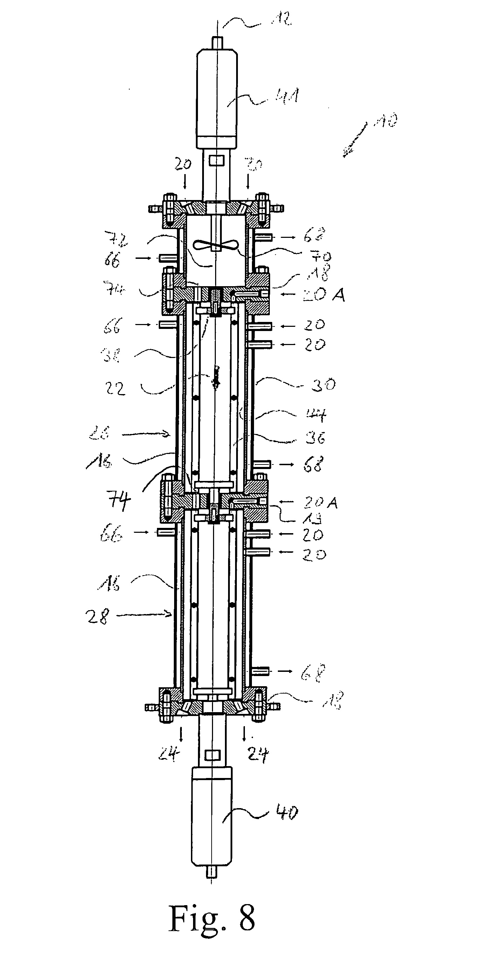

Wie in Fig. 8 dargestellt, kann der Rohrreaktor 10 in zwei oder mehrere, hier dargestellt sind zwei separate Reaktionskammern aufgeteilt sein die jeweils durch eine Zwischenplatte 19 voneinander getrennt sind, wobei jedoch der Stofftransport in Strömungsrichtung durch Durchtrittsöffnungen 74 ermöglicht wird. Sowohl in der Stirnplatte 18, die zwischen der Mischkammer und dem ersten Reaktorraum angeordnet ist, als auch in der Zwischenplatte 19 befinden sich Einlässe 20A für weitere Edukte wie zum Beispiel Lösungsmittel, Katalysatoren oder Monomere. Weitere Einlässe 20 befinden sich in Strömungsrichtung gesehen am Anfang des jeweiligen Reaktorraums. Die Einlässe 20A und 20 haben den Vorteil dass hier über die Reaktionsparameter in gewünschter Weise beeinflusst werden können. So kann der Zusatz von Lösungsmittel zum Beispiel die Viskosität des Reaktionsmediums verrringern, der Zusatz von weiteren Mengen oder anderen Monomeren oder der Zusatz von Katalysator die Kettenlänge und/oder Struktur des Polymers verändern.

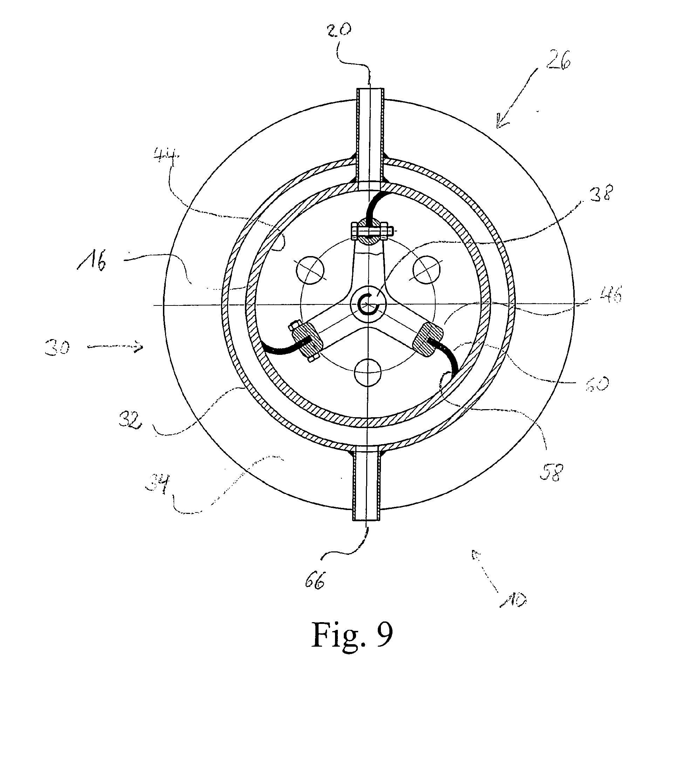

Wie in der Querschnittsansicht in Fig. 9 dargestellt, schaben die Schaberkanten 58 der Schaberelemente 60, die über die Befestigungsköpfe 46 mit dem Antrieb 38 verbunden sind, in Umlaufrichtung die Innenseite 44 des Reaktorgehäuses ab. Die Zuführung von edukten erfolgt über einen Einlass 20. Der Aussenmantel 30 und das Reaktorgehäuse 16 begrenzen das Volumen des Wärmetauschers 26. Die spiralförmige Trennwand 32, hier in Form eines gewundenen Rohres vorgesehen, begrenzt einen spiralförmigen Wärmetauscherkanal 34 in den über den Einlass 66 Wärmetauschermedium zugeführt werden kann.

Eine Bezugszeichenliste ist nachstehend angegeben:
- 10: Rohrreaktor
- 12: geometrische Mittelachse
- 14: Schwerkraftrichtung
- 16, 44: rohrförmiges Reaktorgehäuse (16), Innenseite des Reaktorgehäuses (44)
- 18: Stirnplatten
- 19: Zwischenplatte
- 20: Einlässe
- 22: Strömungsrichtung
- 24: Auslässe
- 26: Erster Wärmetauscher
- 28: Zweiter Wärmetauscher
- 30: Außenmantel
- 32: spiralförmige Trennwand
- 34: spiralförmiger Wärmetauscherkanal
- 36: Schaber
- 37: Verbindungselement
- 38: Antrieb
- 40, 41: Motor
- 42: Schaberblätter
- 46: Befestigungskopf
- 48: Feder
- 50: Bohrung
- 52: Deckel
- 54: Teilschaber
- 56: Dreibein
- 58: Schaberkante
- 60: Schaberelement
- 62: Halteelement
- 64: Haltestift
- 66: Einlass Wärmetauschermedium
- 68: Auslass Wärmetauschermedium
- 70: Mischelement (hier: Impeller)
- 72: Mischkammer
- 74: Durchtrittsöffnungen

## Patentansprüche

1. Rohrreaktor zur kontinuierlichen Herstellung von Polymeren, insbesondere synthetischen Kautschuken, umfassend zumindest ein im Wesentlichen rohrförmiges Reaktorgehäuse (16), wobei das Reaktorgehäuse (16) einen Antrieb (38) aufweist, der mit zumindest einem innerhalb des Reaktorgehäuses (16) drehbar angeordneten Schaber (36) verbunden ist und wobei der Schaber (36) mindestens ein Schaberblatt (42) zum Entlanglaufen an einer Innenseite (44) des Reaktorgehäuses (16) aufweist.

2. Rohrreaktor nach Anspruch 1 **dadurch gekennzeichnet, dass** die geometrische Mittelachse (12) im Wesentlichen horizontal angeordnet ist.

3. Rohrreaktor nach Anspruch 1 oder 2, **dadurch gekennzeichnet, dass** das Reaktorgehäuse (16) mit einer Fördereinrichtung zum Fördern von Edukten in das Reaktorgehäuse (16) und/oder zum Fördern von Produkten aus dem Reaktorgehäuse (16) verbunden ist, wobei die Förderleistung der Fördereinrichtung derart eingestellt ist, dass sich innerhalb des Reaktorgehäuses (16) im Wesentlichen eine Kolbenströmung ausbildet.

4. Rohrreaktor nach einem der Ansprüche 1 bis 3, **dadurch gekennzeichnet, dass** die Drehgeschwindigkeit und Form des Schabers (36) derart eingestellt ist, dass zumindest in einem axialen Teilbereich des Reaktorgehäuses (16) durch das Schaberblatt (42) nur eine Geschwindigkeitskomponente in radialer Richtung und/oder in Umfangsrichtung auf eine Strömung im Reaktorgehäuse (16) aufprägbar ist.

5. Rohrreaktor nach einem der Ansprüche 1 bis 4, **dadurch gekennzeichnet, dass** in axialer Richtung des Reaktorgehäuses (16) mindestens zwei Wärmetauscher (26, 28) zur Einstellung der Temperatur einer innerhalb des Reaktorgehäuses (16) vorgesehenen Strömung angeordnet sind, wobei die Wärmetauscher (26, 28) derart voneinander getrennt sind, dass für jeden Wärmetauscher (26, 28) eine unterschiedliche Temperatur einstellbar ist.

6. Rohrreaktor nach Anspruch 5 **dadurch gekennzeichnet, dass** der Wärmetauscher (26, 28) einen Teil des Reaktorgehäuses (16) umschließenden Außenmantel (30) aufweist und insbesondere zwischen dem Außenmantel (30) und dem Reaktorgehäuse (16) eine spiralförmige Trennwand (32) zur Ausbildung eines spiralförmigen Wärmetauscherkanals (34) angeordnet ist.

7. Rohrreaktor nach einem der Ansprüche 1 bis 6 **dadurch gekennzeichnet, dass** ein Verhältnis einer Innenfläche A des rohrförmigen Reaktorgehäuses (16) zu einem Volumen V des rohrförmigen Reaktorgehäuses (116) 0,1 m²/m³ ≤ A/V ≤ 100 m²/m³ beträgt.

8. Rohrreaktor nach einem der Ansprüche 1 bis 7 **dadurch gekennzeichnet, dass** der Schaber (36) mindestens zwei Teilschaber (54) aufweist, wobei die Teilschaber (54) in axialer Richtung gelenkig miteinander verbunden sind.

9. Rohrreaktor nach einem der Ansprüche 1 bis 8 **dadurch gekennzeichnet, dass** der Schaber (36) über einen Antrieb (38) antreibbar ist und der Antrieb (38) über eine zwischen dem Antrieb (38) und dem Reaktorgehäuse (16) angeordnete doppeltwirkende Gleitringdichtung abgedichtet ist, wobei die Gleitringdichtung insbesondere ein unter den Polymerisationsbedingungen inertes Sperrmedium enthält.

10. Rohrreaktor nach einem der Ansprüche 1 bis 8 **dadurch gekennzeichnet, dass** das Schaberblatt (42) eine Oberfläche mit einem im Vergleich zu Stahl geringeren Reibungskoeffizienten aufweist.

11. Rohrreaktor nach einem der Ansprüche 1 bis 10 **dadurch gekennzeichnet, dass** das Schaberblatt (42) zu einer durch die geometrische Mittelachse (12) verlaufenden radial ausgerichteten Linie geneigt und/oder gebogen ist, wobei das Schaberblatt (42) einen nach radial innen ausgerichteten Befestigungskopf (46) aufweist und auf das Schaberblatt (42), insbesondere auf den Befestigungskopf (46), eine nach radial außen gerichtete Kraft, insbesondere Federkraft, aufprägbar ist.

12. Rohrreaktor nach einem der Ansprüche 1 bis 11 **dadurch gekennzeichnet, dass** in axialer Richtung mindestens zwei Schaberblätter (42) angeordnet sind, wobei die Schaberblätter (42) um einen Winkel α in Umfangsrichtung versetzt sind und der Winkel α insbesondere 30° ≤ α ≤ 150°, vorzugsweise 45° ≤ α ≤ 135°, weiter bevorzugt 60° ≤ α ≤ 120° und besonders bevorzugt α = 90°±2° beträgt.

13. Rohrreaktor nach einem der Ansprüche 1 bis 12, **dadurch gekennzeichnet, dass** der Rohrreaktor stromaufwärts mit zumindest einer Mischkammer (72) verbunden ist, die ein die Mischkammer umschließendes Gehäuse und zumindest ein innerhalb der Mischkammer angeordnetes Mischelement (70) aufweist.

14. Rohrreaktor nach Anspruch 13, **dadurch gekennzeichnet, dass** das Mischelement (70) ein Impeller ist.

15. Verwendung eines Rohrreaktors nach einem der Ansprüche 1 bis 14 zur Herstellung von Polymeren durch Polymerisation von polymerisierbaren Monomeren..

16. Verwendung nach Anspruch 15, **dadurch gekennzeichnet, dass** die Polymere synthetische Kautschuke sind.

17. Verfahren zur kontinuierlichen Herstellung von Polymeren durch Polymerisation von polymerisierbaren Monomeren, **dadurch gekennzeichnet, dass**
in einem Rohrreaktor (10) nach einem der Ansprüche 1 bis 14, im Wesentlichen eine in horizontaler Richtung verlaufende Kolbenströmung der Edukte und der Produkte aufgeprägt wird und
bei der Polymerisation sich an einer Innenseite (44) eines Reaktorgehäuses (16) des Rohrreaktors (10) gegebenenfalls ablagernde Feststoffe oder Gele abgeschabt werden.

18. Verfahren nach Anspruch 17, bei dem in Strömungsrichtung unterschiedliche Wärmetauschertemperaturen zur Einstellung eines vordefinierten Molekulargewichts unter Berücksichtigung der bei der Polymerisation auftretenden Wärmebilanzen, Verweilzeiten und Konzentrationen aufgeprägt werden.

19. Verfahren nach Anspruch 17 oder 18, bei dem das Abschaben von gegebenenfalls abgelagerten Feststoffen oder Gelen mit einer Geschwindigkeit v an der Innenseite (44) des Reaktorgehäuses (16) von 0,05 m/s ≤ v ≤ 10 m/s erfolgt.

20. Verfahren nach einem der Ansprüche 17 bis 19, **dadurch gekennzeichnet, dass** die Edukte vor dem Eintritt in den Rohrreaktor in einer Mischkammer 72 durch ein Mischelement (70) mit einer Mischenergie von 0,001 bis 120 J/l durchmischt werden.
